(19) Europäisches Patentamt / European Patent Office / Office européen des brevets

(11) **EP 4 321 032 A1**

(12) **EUROPEAN PATENT APPLICATION**
published in accordance with Art. 153(4) EPC

(43) Date of publication:
**14.02.2024 Bulletin 2024/07**

(21) Application number: **22784670.6**

(22) Date of filing: **05.04.2022**

(51) International Patent Classification (IPC):
*A23J 1/00* (2006.01)     *A23J 3/34* (2006.01)
*A23L 2/52* (2006.01)     *A23L 2/66* (2006.01)
*A23L 33/185* (2016.01)

(52) Cooperative Patent Classification (CPC):
**A23J 1/00; A23J 3/34; A23L 2/52; A23L 2/66;
A23L 33/185**

(86) International application number:
**PCT/JP2022/017087**

(87) International publication number:
**WO 2022/215688 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2021  JP 2021064379**

(71) Applicants:
• **Amano Enzyme Europe Ltd.
OX14 4SH (GB)**

• **Amano Enzyme Inc.
Nagoya-shi
Aichi 460-8630 (JP)**

(72) Inventor: **FUJIOKA, Hiroki
Abingdon, Oxfordshire, OX14 4SH (GB)**

(74) Representative: **Müller-Boré & Partner
Patentanwälte PartG mbB
Friedenheimer Brücke 21
80639 München (DE)**

(54) **PROCESSED HEMP PROTEIN-INCLUDING LIQUID COMPOSITION AND PRODUCTION METHOD THEREFOR**

(57)    One purpose of the present invention is to provide a processing technology that can increase the solubility of a processed hemp protein-including liquid composition while suppressing changes in flavor. Solubility has been increased while suppressing changes in flavor in this processed hemp protein-including liquid composition, which is obtained through a processed hemp protein-including liquid composition production method including a step in which a liquid composition that includes a hemp protein is treated with a bacteria-derived protease and a protein deamidating enzyme.

**Description**

TECHNICAL FIELD

The present invention relates to a method for producing a processed hemp protein-containing liquid composition. Specifically, the present invention relates to a method for producing a processed hemp protein-containing liquid composition in which the solubility is improved and the taste change is suppressed.

BACKGROUND ART

Plant-based protein beverages (plant-based milk), which are rich in nutrients and have a long storage period, have been increasingly popular as alternatives to animal milk for various reasons such as the recent health boom, countermeasures against allergic problems, religious reasons, and increase in cases where people avoid outings accompanying the spread of infectious diseases.

On the other hand, plant-based proteins are generally inferior in characteristics such as solubility to proteins contained in animal milk, and thus their use is inevitably limited. For this reason, plant-based milk cannot sufficiently come close to animal milk as an alternative to animal milk yet, or plant-based milk has not been fully used or applied.

With regard to a method for improving the solubility of a plant-based protein, deamidation, that is, hydrolysis of an amide group of a side chain of a glutamine residue or an asparagine residue in the protein is known as an effective method. For example, Patent Document 1 discloses that by treating plant-based milk with a protein deamidase, aggregation which occurs when the plant-based milk is added to a high-temperature liquid food or beverage can be suppressed.

PRIOR ART DOCUMENT

PATENT DOCUMENT

Patent Document 1: WO 2020/171106 A

SUMMARY OF THE INVENTION

PROBLEMS TO BE SOLVED BY THE INVENTION

Further improvement of the processing technique is desired in order to make plant-based milk widely and deeply permeate the general market. As characteristics to be obtained by processing, solubility is still regarded as important. As a means for improving the solubility of a plant protein, the use of a protein deamidase is known, but its solubilizing effect is limited. For this reason, a processing technique that exhibits a satisfactory level of solubilizing effect on plant-based milk has not yet been known.

The present inventor has attempted to improve the solubility of plant-based milk by combining additional solubilizing means, but the solubility has not improved yet. The present inventor has also faced new problems that in some cases, since the additional solubilizing means has a different point of action from the protein deamidase, the component composition of the plant-based milk is undesirably changed, and an undesired taste change may be caused.

It is therefore an object of the present invention to provide a processing technique capable of improving the solubility of a plant-based protein-containing liquid composition such as plant-based milk (that is, the amount of the protein dissolved in water is further increased as compared with the case where the protein is solubilized only by a protein deamidase) and suppressing a change in taste.

MEANS FOR SOLVING THE PROBLEM

The present inventor has found that by selecting a hemp protein-containing liquid composition as a plant-based protein-containing liquid composition and treating the composition with a combination of a bacterial protease and a protein deamidase, a change in taste can be suppressed while solubility is improved. The present invention has been completed by further conducting studies based on these findings.

That is, the present invention provides inventions of the following aspects.

Item 1. A method for producing a processed hemp protein-containing liquid composition, the method including a step of treating a liquid composition containing hemp protein with a bacterial protease and a protein deamidase.

Item 2. The method according to item 1, in which the bacterial protease is a protease derived from genus Bacillus and/or genus Geobacillus.

Item 3. The method according to item 1 or 2, in which the bacterial protease is selected from the group consisting of proteases derived from Bacillus stearothermophilus, Bacillus licheniformis, and Bacillus amyloliquefaciens, and corresponding genus Geobacillus.

Item 4. The method according to any one of items 1 to 3, in which the liquid composition containing hemp protein is hemp milk.

Item 5. A solubilizer for a hemp protein-containing liquid composition, the solubilizer including a bacterial protease and a protein deamidase.

Item 6. A solubilizer including a bacterial protease and used to solubilize a hemp protein-containing liquid composition that is treated with a protein deamidase, while suppressing a change in taste.

ADVANTAGES OF THE INVENTION

According to the present invention, there is provided a processing technique capable of improving the solubility of a hemp protein-containing liquid composition and suppressing a change in taste.

EMBODIMENTS OF THE INVENTION

1. Method for producing processed hemp protein-containing liquid composition

The method for producing a processed hemp protein-containing liquid composition according to the present invention includes a step of treating a hemp protein-containing liquid composition with a bacterial protease and a protein deamidase. Hereinafter, the method for producing the processed hemp protein-containing liquid composition according to the present invention will be described in detail.

1-1. Hemp protein-containing liquid composition

The hemp protein-containing liquid composition used in the present invention is not particularly limited as long as it is a liquid in which hemp protein is dissolved and/or dispersed in water. Specific examples of the hemp protein-containing liquid composition include (i) a liquid obtained by dispersing dry powder of a food material containing hemp protein in water; (ii) a liquid obtained by crushing and dispersing a food material containing hemp protein in water, and removing an insoluble matter derived from a skin or the like of the food material by any means such as centrifugation, filtration, filtration bag, or sieve as necessary; (iii) a liquid obtained by, for example, removing components other than the hemp protein from the liquid of the above (i) or (ii) to increase the content of the hemp protein; and (iv) a liquid obtained by dissolving and/or dispersing the dry powder prepared from the liquid of any one of (i) to (iii) in water. A food material containing hemp protein is usually hemp seeds. As a preferred example of the liquid composition containing hemp protein, there may be mentioned hemp milk. The term "hemp" in the present invention refers to a so-called industrial hemp, and specifically refers to a cultivar which does not contain tetrahydrocannabinol (THC) causing perceptual alterations or has a low THC concentration. Since industrial hemp does not contain THC or has a low concentration thereof, it has no efficacy as a perceptual alteration drug or cannot lead to abuse.

The protein content in the liquid composition containing hemp protein used in the present invention is not particularly limited, but it is, for example, 0.1% by weight or more, preferably 0.5% by weight or more, and more preferably 1% by weight or more, 2% by weight or more, 3% by weight or more, 4% by weight or more, or 5% by weight or more. The upper limit of the protein content range in the liquid composition containing hemp protein is, for example, 11% by weight or less, and from the viewpoint that the taste change suppressing effect is further improved, it is preferably 10% by weight or less, more preferably 9% by weight or less, still more preferably 8% by weight or less, 7% by weight or less, and even still more preferably 6% by weight or less.

1-2. Protein deamidase

The protein deamidase used in the present invention is an enzyme that exhibits an action of decomposing an amide group-containing side chain of a protein without cleavage of a peptide bond or crosslinking of the protein, and the kind, origin, and the like thereof are not particularly limited. In addition, as long as the above action is the main activity, it may further have an action of decomposing an amide group-containing side chain of a protein accompanied by cleavage of a peptide bond and crosslinking of the protein.

Examples of the protein deamidase include an enzyme that deamidates a glutamine residue in a protein and converts it into glutamic acid (for example, protein glutaminase) and an enzyme that deamidates an asparagine residue in a protein and converts it into aspartic acid (for example, protein asparaginase).

More specific examples of the protein deamidase include protein deamidases derived from the genus Chryseobacterium, the genus Flavobacterium, the genus Empedobacter, the genus Sphingobacterium, the genus Aureobacterium, the genus Myroides, the genus Luteimicrobium, the genus Agromyces, the genus Microbacterium, and the genus Leifsonia. These protein deamidases are known, and for example, JP 2000-50887 A, JP 2001-218590 A, WO 2006/075772 A1, and WO 2015/133590 can be referred to. These protein deamidases may be used singly or in combination of two or more kinds thereof.

Among these protein deamidases, from the viewpoint of further enhancing the solubility improving effect and/or the taste change suppressing effect, the protein deamidase is preferably a protein deamidase derived from the genus Chryseobacterium, more preferably a protein glutaminase derived from the genus Chryseobacterium, still more preferably a protein glutaminase derived from Chryseobacterium proteolyticum species, and even still more preferably a protein glutaminase derived from the Chryseobacterium proteolyticum 9670 strain.

The protein deamidase can be prepared from a culture solution of a microorganism from which the protein deamidase is derived. As a specific example of the preparation method, there may be mentioned a method of collecting a protein deamidase from a culture solution or a bacterial cell of the above microorganism. For example, in the case of using a microorganism that secrets a protein deamidase, an enzyme can be separated and/or purified after recovering bacterial cells from the culture solution in advance by filtration, a centrifugal treatment, or the like, as necessary. In the case of using a microorganism that does not secret a protein deamidase, an enzyme can be separated and/or purified after recovering bacterial cells from the culture solution in advance as necessary and then disrupting the bacterial cells by pressurization treatment, an ultrasonic treatment, or the like to expose the enzyme. As an enzyme separation and/or purification method, a known protein separation and/or purification method can be used without particular limitation, and examples thereof include a centrifugal separation method, a UF concentration method, a salting-out method, and various chromatography methods using an ion exchange resin and the like. The separated and/or purified enzyme can be pulverized by a drying method such as freeze-drying or reduced-pressure drying, and can also be pulverized using an appropriate excipient and/or drying aid in the drying method. The separated and/or purified enzyme can also be liquefied by adding an appropriate additive and subjecting it to filtration sterilization.

As the protein deamidase, a commercially available product can also be used, and examples of a preferred commercially available product include protein glutaminase "Amano" 500 (derived from Chryseobacterium proteolyticum species) manufactured by Amano Enzyme Inc.

The amount of the protein deamidase used is not particularly limited, but the amount of the protein deamidase used per g of the hemp protein is, for example, 0.1 U or more. From the viewpoint that the solubility improving effect and/or taste change suppressing effect is further enhanced, the amount of the protein deamidase used per g of the hemp protein is preferably 1 U or more, more preferably 2 U or more, still more preferably 3 U or more, even still more preferably 4 U or more, and further preferably 4.5 U or more. The upper limit of the range of the amount of the protein deamidase used per g of the hemp protein is not particularly limited, and examples thereof include 50 U or less, 20 U or less, 10 U or less, 5.5 U or less, and 5 U or less.

The amount of the protein deamidase used per g of hemp seeds is, for example, 0.01 U or more. From the viewpoint that the solubility improving effect and/or taste change suppressing effect is further enhanced, the amount of the protein deamidase used per g of hemp seeds is preferably 0.1 U or more, 0.5 U or more, more preferably 1 U or more, still more preferably 2 U or more, even still more preferably 3 U or more, and further preferably 3.5 U or more. The upper limit of the range of the amount of the protein deamidase used per g of hemp seeds is not particularly limited, and examples thereof include 50 U or less, 20 U or less, 10 U or less, 5 U or less, and 4 U or less.

For the activity of the protein deamidase, the amount of enzyme liberating 1 $\mu$mol of ammonia per minute using benzyloxycarbonyl-L-glutaminylglycine (Z-Gln-Gly) as a substrate is defined as 1 unit (1 U).

1-3. Bacterial protease

The bacterial protease used in the present invention is not particularly limited as long as it is an enzyme derived from a bacterium that hydrolyzes a peptide bond of a protein. The bacterial protease further enhances the solubility improving effect by the protein deamidase and suppresses a change in taste.

The bacterial protease is not particularly limited, but from the viewpoint of further enhancing the solubility improving effect and/or the taste change suppressing effect, proteases derived from the genus Bacillus and/or the genus Geobacillus are preferable, and proteases derived from Bacillus stearothermophilus, Bacillus licheniformis, Bacillus amyloliquefaciens, and Bacillus subtilis, and the genus Geobacillus thereof are more preferable.

As the bacterial protease, one kind of these proteases may be used, or two or more kinds thereof may be used in combination. Among these bacterial proteases, Geobacillus stearothermophilus, Bacillus licheniformis, and Bacillus amyloliquefaciens are still more preferable from the viewpoint of further enhancing the solubility improving effect and/or the taste change suppressing effect.

The bacterial protease can be prepared by a known method. As an example, when a protease derived from the genus Bacillus is prepared, the protease can be easily prepared by a method in which a bacterium of the genus Bacillus is cultured and the protease is separated using known means, a method using a genetic recombination technique, or the like. As the bacterial protease, a commercially available product may be used. Examples of commercially available bacterial proteases include Thermoase PC10F (neutral protease derived from Geobacillus stearothermophilus), Protin SD-NY10 (neutral protease derived from Bacillus amyloliquefaciens), Protin SD-AY10 (alkaline protease derived from Bacillus licheniformis), and Protease N "Amano" G (neutral protease derived from Bacillus subtilis) manufactured by Amano Enzyme Inc; Neutrase (neutral protease derived from Bacillus amyloliquefaciens), Esperase (alkaline protease derived from Bacillus sp.), Savinase (alkaline protease derived from Bacillus sp.), Everlase (alkaline protease derived from Bacillus sp.), and Alcalase (alkaline protease derived from Bacillus licheniformis) manufactured by Novozymes Japan Ltd.; and AROASE NS (neutral protease derived from Bacillus subtilis), AROASE AP-10 (neutral protease derived from Bacillus subtilis), and AROASE NP-10 (neutral protease derived from Bacillus subtilis) manufactured by Yakult Pharmaceutical Industry Co., Ltd.

The amount of the bacterial protease used is not particularly limited, but the amount used per g of the hemp protein is, for example, 0.1 U or more. From the viewpoint that the solubility improving effect is further enhanced, the amount of the bacterial protease used per g of the hemp protein is preferably 1 U or more, more preferably 10 U or more, still more preferably 100 U or more, even still more preferably 200 U or more, and further preferably 300 U or more. The upper limit of the range of the amount of the bacterial protease used per g of the hemp protein is not particularly limited, but it is preferably 1000 U or less, more preferably 800 U or less, 700 U or less, still more preferably 600 U or less, and even still more preferably 500 U or less from the viewpoint that the taste change suppressing effect is further enhanced.

The amount of the bacterial protease used per g of hemp seeds is, for example, 0.1 U or more. From the viewpoint that the solubility improving effect is further enhanced, the amount of the bacterial protease used per g of hemp seeds is preferably 1 U or more, more preferably 10 U or more, and still more preferably 100 U or more, and the upper limit of the range of the amount of the bacterial protease used per g of hemp seeds is not particularly limited, but from the viewpoint that the taste change suppressing effect is further enhanced, it is preferably 1000 U or less, more preferably 600 U or less, 500 U or less, still more preferably 400 U or less, and even still more preferably 350 U or less.

The ratio of the protein deamidase and the bacterial protease used is determined based on the above amount of each enzyme used, but from the viewpoint that the solubility improving effect is further enhanced, the amount of the bacterial protease used per 1 U of the protein deamidase is preferably 1 U or more, more preferably 10 U or more, 20 U or more, still more preferably 30 U or more, 40 U or more, even still more preferably 50 U or more, and further preferably 60 U or more. The upper limit of the range of the amount of the bacterial protease used per 1 U of the protein deamidase is preferably 200 U or less, more preferably 150 U or less, 120 U or less, and still more preferably 100 U or less from the viewpoint that the taste change suppressing effect is further enhanced.

The protease activity is measured by the Folin method using casein as a substrate. That is, for the protease activity, an enzymatic reaction is carried out by a conventional method using casein as a substrate, and the amount of enzyme increasing the Folin test solution coloring substance per minute to the amount corresponding to 1 $\mu$g of tyrosine is defined as 1 unit (1 U).

1-4. Conditions such as reaction conditions

In the step of treating a hemp protein-containing liquid composition with a bacterial protease and a protein deamidase, the order of applying the bacterial protease and the protein deamidase is not particularly limited, and each enzyme may be applied sequentially in any order, or both enzymes may be applied simultaneously.

The temperature of treatment with the bacterial protease and the protein deamidase is not particularly limited, and can be appropriately determined by those skilled in the art according to the optimum temperature of the enzyme used and/or the thermal properties of the hemp protein-containing liquid composition, and the like, but it is, for example, 40 to 70°C, preferably 48 to 62°C.

The time of enzyme treatment reaction of the hemp protein-containing liquid composition is not particularly limited, and may be appropriately determined according to the preparation scale of the composition, the timing of addition of the enzyme, and the like, but it is, for example, 30 minutes or longer, preferably 50 minutes or longer. The upper limit of the range of the time of enzyme treatment reaction is not particularly limited, but it is, for example, 12 hours or less, 8 hours or less, or 4 hours or less.

The hemp protein-containing liquid composition after completion of the enzyme treatment is subjected to an enzyme deactivation treatment, then cooled, and subjected to post-treatment such as filtration as necessary, thereby obtaining a processed hemp protein-containing liquid composition.

Furthermore, a solid hemp protein composition in which a change in taste is suppressed and which has improved solubility in water can also be prepared through a drying step from the obtained processed hemp protein-containing liquid composition. The drying method is not particularly limited, and examples thereof include freeze drying, vacuum drying, and spray drying. Examples of the shape of the solid hemp protein composition include powder, fine particles, and granules.

2. Solubilizer for hemp protein-containing liquid composition

As described above, the combination of the bacterial protease and the protein deamidase can improve the solubility of the hemp protein-containing liquid composition. Thus, the present invention also provides a solubilizer for a hemp protein-containing liquid composition, the solubilizer including a bacterial protease and a protein deamidase.

In the solubilizer, the kind, amount, and the like of components to be used are as described in the section "1. Method for producing processed hemp protein-containing liquid composition".

3. Solubilizer for hemp protein-containing liquid composition to be treated with protein deamidase

As described above, the bacterial protease can solubilize the hemp protein-containing liquid composition to be treated with the protein deamidase while suppressing a change in taste thereof. Specifically, when the hemp protein-containing liquid composition treated with a protein deamidase is solubilized using a bacterial protease, the hemp protein-containing liquid composition can be solubilized without causing a taste change that usually occurs by protease treatment. Thus, the present invention also provides a solubilizer that contains a bacterial protease and is used for solubilizing a hemp protein-containing liquid composition to be treated with a protein deamidase while suppressing a change in taste. In this solubilizer, "solubilizing" means that the amount of the protein dissolved in water is further increased as compared with the case where the protein is solubilized only by the protein deamidase. Specific modes of use of the solubilizer include all of a mode in which the hemp protein-containing liquid composition is treated with a solubilizer and a protein deamidase simultaneously, a mode in which the hemp protein-containing liquid composition is treated with a protein deamidase and then treated with a solubilizer, and a mode in which the hemp protein-containing liquid composition is treated with a solubilizer and then treated with a protein deamidase.

In the solubilizer, the kind, amount, and the like of components to be used are as described in the section "1. Method for producing processed hemp protein-containing liquid composition".

EXAMPLES

Hereinafter, the present invention will be specifically described with reference to the examples, but the present invention is not to be construed as being limited to the following examples.

[Enzyme used]

· PG-500 (Protein-glutaminase "Amano" 500): Protein glutaminase derived from Chryseobacterium proteolyticum (protein deamidase)
· TH-PC10F (Thermoase PC10F): Protease derived from Geobacillus stearothermophilus
· PR-NY (Protin SD-NY10): Protease derived from Bacillus amyloliquefaciens
· PR-AY (Protin SD-AY10): Protease derived from Bacillus licheniformis
· PR-AX (ProteAX): Protease derived from Aspergillus oryzae

[Method for measuring enzyme activity]

(1) Protease activity measurement method

A 0.6% (w/v) casein solution (0.05 mol/L sodium hydrogen phosphate, pH 8.0), 5 mL, was warmed at 37°C for 10 minutes, 1 mL of a sample solution containing protease was then added, and the mixture was immediately shaken. This solution was allowed to stand at 37°C for 10 minutes, 5 mL of a trichloroacetic acid test solution (1.8% (w/v) trichloroacetic acid, 1.8% (w/v) sodium acetate, and 0.33 mol/L acetic acid) was then added, the mixture was shaken, and again allowed to stand at 37°C for 30 minutes, and the mixture was filtered. The first filtrate (3 mL) was removed, and the next filtrate (2 mL) was weighed out. Then, 5 mL of a 0.55 mol/L sodium carbonate test solution and 1 mL of a Folin test solution (1 → 3) were added, and the mixture was shaken well and allowed to stand at 37°C for 30 minutes. For this liquid (enzymatic reaction solution), the absorbance AT at a wavelength of 660 nm was measured using water as a control.

A liquid (blank) was separately obtained by operating in the same manner as the above-described enzymatic reaction solution except that 1 mL of a sample solution containing protease was weighed out, 5 mL of a trichloroacetic acid test solution (1.8% (w/v) trichloroacetic acid, 1.8% (w/v) sodium acetate, and 0.33 mol/L acetic acid) was added and shaken, then 5 mL of a 0.6% (w/v) casein solution (0.05 mol/L sodium hydrogen phosphate, pH 8.0) was added, and the mixture was immediately shaken and allowed to stand at 37°C for 30 minutes. The absorbance AB was measured for the liquid (blank).

The amount of enzyme increasing the Folin test solution coloring substance per minute to the amount corresponding to 1 μg of tyrosine was defined as 1 unit (1 U).

One mL, 2 mL, 3 mL, and 4 mL of a 1 mg/mL tyrosine standard stock solution (0.2 mol/L hydrochloric acid) were each weighed out, and a 0.2 mol/L hydrochloric acid test solution was added thereto to a volume of 100 mL. To 2 mL of each solution weighed out, 5 mL of a 0.55 mol/L sodium carbonate test solution and 1 mL of a Folin test solution (1 → 3) were added, the mixture was immediately shaken, and the mixture was allowed to stand at 37°C for 30 minutes. For these liquids, the absorbances A1, A2, A3, and A4 at a wavelength of 660 nm were measured using a liquid obtained by weighing 2 mL of a 0.2 mol/L hydrochloric acid test solution and operating in the same manner as described above, as a control. A calibration curve was prepared by plotting the absorbances A1, A2, A3, and A4 on the vertical axis and the amount of tyrosine (μg) in 2 mL of each solution on the horizontal axis, and the amount of tyrosine (μg) corresponding to the absorbance difference 1 was determined.

[Mathematical Formula 1]

$$\text{Protease activity (U/g, U/mL)} = (AT - AB) \times F \times 11/2 \times 1/10 \times 1/M$$

AT: absorbance of enzymatic reaction solution
AB: absorbance of blank
F: amount of tyrosine (μg) corresponding to absorbance difference 1 determined from calibration curve of tyrosine
11/2: factor for conversion to total amount of liquid after stopping reaction
1/10: factor for conversion to per minute of reaction time
M: sample amount (g or mL) in 1 mL of sample solution

(2) Protein deamidase activity value measurement method

To 1 mL of a 0.2 M phosphate buffer (pH 6.5) containing 30 mM Z-Gln-Gly, 0.1 mL of a sample solution containing a protein deamidase was added, and the mixture was allowed to stand at 37°C for 10 minutes, and then 1 mL of a 0.4 M TCA solution was added to stop the reaction. As a blank, 1 mL of a 0.4 M TCA test solution was added to 1 mL of a 0.2 M phosphate buffer (pH 6.5) containing 30 mM Z-Gln-Gly, 0.1 mL of a sample solution containing a protein deamidase was further added, and the mixture was allowed to stand at 37°C for 10 minutes.

For the obtained solution, the amount of ammonia generated in the reaction solution was measured using Ammonia Test Wako (FUJIFILM Wako Pure Chemical). The ammonia concentration in the reaction solution was determined from a calibration curve representing the relationship between the ammonia concentration and the absorbance (630 nm) prepared using an ammonia standard solution (ammonium chloride).

The activity of the protein deamidase was calculated from the following formula with the proviso that the amount of enzyme producing 1 μmol ammonia per minute was defined as 1 unit (1 U). In the formula, the reaction solution amount is 2.1, the enzyme solution amount is 0.1, and Df is the dilution ratio of the enzyme solution. Further, 17.03 is the molecular weight of ammonia.

[Mathematical Formula 2]

$$\text{Protein deamidase activity (U/mL)} = \text{ammonia concentration in reaction solution (mg/L)} \times (1/17.03) \times (\text{reaction solution amount/enzyme solution amount}) \times (1/10) \times Df$$

[Test example]

(1) Production of processed plant-based milk

The enzyme shown in Tables 1 to 3 was added to hemp milk (plant-based milk using hemp seed as a raw material), rice milk (plant-based milk using rice as a raw material), almond milk (plant-based milk using almond as a raw material), chickpea milk (plant-based milk using chickpea as a raw material), or pea milk (plant-based milk using pea as a raw material) so as to give the indicated amount, and the mixture was treated at 50°C for 1.5 hours. The treated plant-based milk composition was inactivated at 90 to 95°C for 15 minutes and cooled by heat dissipation on ice to obtain processed plant-based milk.

(2) Evaluation of solubility improving effect

The obtained processed plant-based milk was centrifuged at 3000 rpm for 10 minutes, and then the supernatant was collected 2 times such that the cloudy upper layer was not collected, and the protein (protein soluble in water) concentration (mg/mL) of the supernatant was measured by the Bradford method. When the protein concentrations in Comparative Examples 1, 5, 9, 14, 17, 19, 22, and 24 in which the protein deamidase was used singly were each 1, the relative concentrations of the protein concentrations in the corresponding Examples and Comparative Examples were calculated. The results are shown in Tables 1 to 3. In addition, the protein relative concentration was classified according to the following criteria, and the degree of the solubility improving effect was evaluated. When the degree of the solubility improving effect was "⊙" or "○", it was determined that the desired solubility improving effect was achieved. The results are shown in Tables 1 to 3.

| | |
|---|---|
| ⊙ | Protein relative concentration of more than 2.0 |
| ○ | Protein relative concentration of more than 1.5 and 2.0 or less |
| △ | Protein relative concentration of more than 1.0 and 1.5 or less |
| × | Protein relative concentration of 1.0 or less |

(3) Evaluation of taste change suppressing effect

Based on the taste of each of the processed plant-based milks of Comparative Examples 1, 5, 9, 14, 17, 19, 22, and 24 in which the protein deamidase was used singly, the taste of the corresponding processed plant-based milk of Examples and Comparative Examples was classified according to the following criteria, and the degree of the taste change suppressing effect was evaluated. When the degrees of the taste change suppressing effect were "⊙" and "○", it was determined that the desired taste change suppressing effect was achieved. The results are shown in Tables 1 to 3.

| | |
|---|---|
| ⊙ | No change in taste was recognized |
| ○ | A slight change in taste was recognized |
| △ | A change in taste was recognized |
| × | A significant change in taste was recognized |

[Table 1]

| | | Comparative Example 1 | Comparative Example 2 | Comparative Example 3 | Comparative Example 4 | Example 1 | Example 2 | Example 3 | Comparative Example 5 | Comparative Example 6 | Comparative Example 7 | Comparative Example 8 | Example 4 | Example 5 | Example 6 |
|---|---|---|---|---|---|---|---|---|---|---|---|---|---|---|---|
| Hemp protein (*1) | | 1% | 1% | 1% | 1% | 1% | 1% | 1% | 3% | 3% | 3% | 3% | 3% | 3% | 3% |
| Protein glutaminase | (*1) | 0.01% | - | - | - | 0.01% | 0.01% | 0.01% | 0.01% | - | - | - | 0.01% | 0.01% | 0.01% |
| | (*2) | 5 U | - | - | - | 5 U | 5 U | 5 U | 5 U | - | - | - | 5 U | 5 U | 5 U |
| | (*3) | 3.75 U | - | - | - | 3.75 U | 3.75 U | 3.75 U | 3.75 U | - | - | - | 3.75 U | 3.75 U | 3.75 U |
| Protease — TH-PC10F | (*1) | - | 0.005% | - | - | 0.005% | - | - | - | 0.005% | - | - | 0.005% | - | - |
| | (*2) | - | 450 U | - | - | 450 U | - | - | - | 450 U | - | - | 450 U | - | - |
| | (*3) | - | 338 U | - | - | 338 U | - | - | - | 338 U | - | - | 338 U | - | - |
| Protease — PR-NY | (*1) | - | - | 0.005% | - | - | 0.005% | - | - | - | 0.005% | - | - | 0.005% | - |
| | (*2) | - | - | 350 U | - | - | 350 U | - | - | - | 350 U | - | - | 350 U | - |
| | (*3) | - | - | 263 U | - | - | 263 U | - | - | - | 263 U | - | - | 263 U | - |
| Protease — PR-AY | (*1) | - | - | - | 0.005% | - | - | 0.005% | - | - | - | 0.005% | - | - | 0.005% |
| | (*2) | - | - | - | 400 U | - | - | 400 U | - | - | - | 400 U | - | - | 400 U |
| | (*3) | - | - | - | 300 U | - | - | 300 U | - | - | - | 300 U | - | - | 300 U |
| Solubility improving effect | | Standard | △ | × | × | ⊙ | ⊙ | ⊙ | Standard | △ | × | × | ⊙ | ⊙ | ⊙ |
| Protein relative concentration | | 1 | 1.22 | 1.00 | 0.89 | 2.44 | 2.44 | 2.33 | 1 | 1.22 | 1.00 | 0.89 | 2.44 | 2.44 | 2.33 |
| Taste change suppressing effect | | Standard | ⊙ | ⊙ | ⊙ | ⊙ | ⊙ | ⊙ | Standard | ⊙ | ⊙ | ⊙ | ⊙ | ⊙ | ⊙ |

(*1) Weight concentration  (*2) Activity value per g of protein  (*3) Activity value per g of raw material

[Table 2]

| | | Comparative Example 9 | Comparative Example 10 | Comparative Example 11 | Comparative Example 12 | Example 7 | Example 8 | Example 9 | Comparative Example 13 | Comparative Example 14 | Comparative Example 15 | Comparative Example 16 | Example 10 | Example 11 |
|---|---|---|---|---|---|---|---|---|---|---|---|---|---|---|
| Hemp protein | (*1) | 5% | 5% | 5% | 5% | 5% | 5% | 5% | 5% | 10% | 10% | 10% | 10% | 10% |
| Protein glutaminase | (*1) | 0.05% | - | - | - | 0.05% | 0.05% | 0.05% | 0.05% | 0.1% | - | - | 0.1% | 0.1% |
| | (*2) | 5 U | - | - | - | 5 U | 5 U | 5 U | 5 U | 5 U | - | - | 5 U | 5 U |
| | (*3) | 3.75 U | - | - | - | 3.75 U | 3.75 U | 3.75 U | 3.75 U | 3.75 U | - | - | 3.75 U | 3.75 U |
| Protease TH-PC10F | (*1) | - | 0.025% | - | - | 0.025% | - | - | - | - | 0.05% | - | 0.05% | - |
| | (*2) | - | 450 U | - | - | 450 U | - | - | - | - | 450 U | - | 450 U | - |
| | (*3) | - | 338 U | - | - | 338 U | - | - | - | - | 338 U | - | 338 U | - |
| Protease PR-NY | (*1) | - | - | 0.025% | - | - | 0.025% | - | - | - | - | - | - | - |
| | (*2) | - | - | 350 U | - | - | 350 U | - | - | - | - | - | - | - |
| | (*3) | - | - | 263 U | - | - | 263 U | - | - | - | - | - | - | - |
| Protease PR-AY | (*1) | - | - | - | 0.025% | - | - | 0.025% | - | - | - | 0.05% | - | 0.05% |
| | (*2) | - | - | - | 400 U | - | - | 400 U | - | - | - | 400 U | - | 400 U |
| | (*3) | - | - | - | 300 U | - | - | 300 U | - | - | - | 300 U | - | 300 U |
| Protease PR-AX | (*1) | - | - | - | - | - | - | - | 0.025% | - | - | - | - | - |
| | (*2) | - | - | - | - | - | - | - | 1200 U | - | - | - | - | - |
| | (*3) | - | - | - | - | - | - | - | 900 U | - | - | - | - | - |
| Solubility improving effect | | Standard | × | × | △ | ⊙ | ⊙ | ⊙ | △ | Standard | △ | × | ⊙ | ⊙ |
| Protein relative concentration | | 1 | 1.00 | 0.80 | 1.15 | 2.15 | 2.25 | 2.15 | 1.22 | 1 | 1.14 | 0.74 | 2.23 | 2.01 |
| Taste change suppressing effect | | Standard | ⊙ | ⊙ | ⊙ | ⊙ | ⊙ | ⊙ | × | Standard | ⊙ | ⊙ | ○ | ○ |

(*1) Weight concentration   (*2) Activity value per g of protein   (*3) Activity value per g of raw material

[Table 3]

| | | Comparative Example 17 | Comparative Example 18 | Comparative Example 19 | Comparative Example 20 | Comparative Example 21 | Comparative Example 22 | Comparative Example 23 | Comparative Example 24 | Comparative Example 25 |
|---|---|---|---|---|---|---|---|---|---|---|
| Rice protein | | 1.64% | 1.64% | - | - | - | - | - | - | - |
| Almond protein | | - | - | 2.80% | 2.80% | 2.80% | - | - | - | - |
| Chickpea protein | | - | - | - | - | - | 2.22% | 2.22% | - | - |
| Pea protein | | - | - | - | - | - | - | - | 3.29% | 3.29% |
| Protein glutaminase | (*1) | 82 ppm | 82 ppm | 140 ppm | 140 ppm | 140 ppm | 111 ppm | 111 ppm | 164.5 ppm | 164.5 ppm |
| | (*2) | 2.5 U | 2.5 U | 2.5 U | 2.5 U | 2.5 U | 2.5 U | 2.5 U | 2.5 U | 2.5 U |
| | (*3) | 0.18 U | 0.18 | 0.49 U | 0.49 | 0.49 | 0.5 U | 0.5 | 1.98 U | 1.98 |
| Protease TH-PC10F | (*1) | - | 16.4 ppm | - | 2.8 ppm | 280 ppm | - | 111 ppm | - | 32.9 ppm |
| | (*2) | - | 90 U | - | 9 U | 900 U | - | 450 U | - | 90 U |
| | (*3) | - | 6.4 U | - | 1.76 U | 176 U | - | 90 U | - | 71.1 U |
| Solubility improving effect | | Standard | × | Standard | × | × | Standard | × | Standard | × |
| Protein relative concentration | | 1 | 0.97 | 1 | 0.87 | 0.34 | 1 | 0.78 | 1 | 0.56 |
| Taste change suppressing effect | | Standard | × | Standard | × | × | Standard | N/A | Standard | △ |

(*1) Weight concentration   (*2) Activity value per g of protein   (*3) Activity value per g of raw material

As is apparent from Tables 1 to 3, by treating the hemp milk with a bacterial protease and a protein deamidase, it was possible to increase the protein solubility of the hemp milk and simultaneously suppress the taste change (Examples 1 to 11), as compared with the cases where the protein deamidase was used singly. In addition, as is apparent from the comparison between Comparative Examples 18, 20, 21, 23, and 25 and Examples 1 to 6, the comparison between Comparative Example 13 and Examples 7 to 9, and the like, it was demonstrated that the effect of enhancing the protein solubility of the hemp milk and simultaneously suppressing a change in taste is a specific effect obtained by selecting hemp milk as the plant-based milk and selecting a bacterial protease as the protease.

**Claims**

1.   A method for producing a processed hemp protein-containing liquid composition, the method comprising a step of treating a liquid composition containing hemp protein with a bacterial protease and a protein deamidase.

2.   The method according to claim 1, wherein the bacterial protease is a protease derived from genus Bacillus and/or genus Geobacillus.

3. The method according to claim 1, wherein the bacterial protease is selected from the group consisting of proteases derived from Bacillus stearothermophilus, Bacillus licheniformis, and Bacillus amyloliquefaciens, and corresponding genus Geobacillus.

4. The method according to claim 1, wherein the liquid composition containing hemp protein is hemp milk.

5. A solubilizer for a hemp protein-containing liquid composition, the solubilizer comprising a bacterial protease and a protein deamidase.

6. A solubilizer comprising a bacterial protease and used to solubilize a hemp protein-containing liquid composition that is treated with a protein deamidase, while suppressing a change in taste.

## INTERNATIONAL SEARCH REPORT

| | International application No. |
| | **PCT/JP2022/017087** |

### A. CLASSIFICATION OF SUBJECT MATTER

*A23J 1/00*(2006.01)i; *A23J 3/34*(2006.01)i; *A23L 2/52*(2006.01)i; *A23L 2/66*(2006.01)i; *A23L 33/185*(2016.01)i
FI:  A23J3/34; A23L2/66; A23J1/00 B; A23L2/00 F; A23L33/185; A23L2/00 J

According to International Patent Classification (IPC) or to both national classification and IPC

### B. FIELDS SEARCHED

Minimum documentation searched (classification system followed by classification symbols)

A23J1/00; A23J3/34; A23L2/52; A23L2/66; A23L33/185

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/MEDLINE/EMBASE/BIOSIS/FSTA (STN)

### C. DOCUMENTS CONSIDERED TO BE RELEVANT

| Category* | Citation of document, with indication, where appropriate, of the relevant passages | Relevant to claim No. |
|---|---|---|
| Y | WO 2020/171106 A1 (AMANO ENZYME INC) 27 August 2020 (2020-08-27)<br>claims, examples | 1-6 |
| Y | CN 108835269 A (NORTHEAST AGRICULTURAL UNIVERSITY) 20 November 2018 (2018-11-20)<br>paragraph [0005] | 1-6 |
| Y | SUN, X. et al. Effect of different proteinases on the solubility of non-sugar soy milk powder. FOOD AND FERMENTATION INDUSTRIES. 2005, vol. 31, pp. 117-121<br>abstract, etc. | 1-6 |
| Y | BAO, L. et al. Improvement of solubility of powdered soybean milk by proteinase hydrolysis. Shipin Kexue (Beijing, China). 1982, vol. 35, pp. 7-11 (abstract), CAplus[online], CAplus Accession No.1983:159358<br>entire text | 1-6 |
| P, X | WO 2022/102723 A1 (AMANO ENZYME INC) 19 May 2022 (2022-05-19)<br>claims, paragraphs [0037], [0040]-[0041] | 1-6 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/017087**

| Patent document cited in search report | | | Publication date (day/month/year) | Patent family member(s) | | | Publication date (day/month/year) |
|---|---|---|---|---|---|---|---|
| WO | 2020/171106 | A1 | 27 August 2020 | EP 3928628 A1 claims, examples EP 3928627 A1 KR 10-2021-0129113 A KR 10-2021-0129112 A | | | |
| CN | 108835269 | A | 20 November 2018 | (Family: none) | | | |
| WO | 2022/102723 | A1 | 19 May 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020171106 A
- JP 2000050887 A
- JP 2001218590 A
- WO 2006075772 A1
- WO 2015133590 A